Europäisches Patentamt

European Patent Office

Office européen des brevets

(11) Veröffentlichungsnummer: **0 017 128**
**B1**

(12) **EUROPÄISCHE PATENTSCHRIFT**

(45) Veröffentlichungstag der Patentschrift:
02.03.83

(21) Anmeldenummer: **80101549.6**

(22) Anmeldetag: **24.03.80**

(51) Int. Cl.³: **A 01 C  17/00,** A 01 C  15/00

(54) **Schleuderstreuer zum Verteilen von Düngemitteln und dgl.**

(30) Priorität: **05.04.79  DE 2913738**

(43) Veröffentlichungstag der Anmeldung:
**15.10.80 Patentblatt 80/21**

(45) Bekanntmachung des Hinweises auf die Patenterteilung:
**02.03.83 Patentblatt 83/9**

(84) Benannte Vertragsstaaten:
**AT BE CH DE FR GB IT NL SE**

(56) Entgegenhaltungen:
**FR-A-826 901**
**FR-A-1 435 922**
**GB-A-1 022 777**
**GB-A-2 014 023**
**NL-C-50 574**

(73) Patentinhaber: **Amazonen-Werke H. Dreyer GmbH & Co.
KG, D-4507 Hasbergen-Gaste (DE)**

(72) Erfinder: **Dreyer, Heinz, Dr., Am Amazonenwerk 7,
D-4507 Hasbergen-Gaste (DE)**

(74) Vertreter: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 43, D-8000 München 22 (DE)**

Schleuderstreuer zum Verteilen von Düngemitteln u. dgl.

Die Erfindung betrifft einen Schleuderstreuer zum Verteilen von Düngemitteln u. dgl. mit einem Vorratsbehälter, in dessen Boden zwei Dosierelemente für zwei quer zur Fahrtrichtung angeordnete Streuorgane vorgesehen sind, von denen jedes Organ aus einer mit mindestens zwei Wurfschaufeln ausgestatteten, rotierend angetriebenen Schleuderscheibe besteht.

Bei einem durch die DE-A-1 457 772 bekanntgewordenen Schleuderstreuer soll die Breite der beiderseitigen, je eine abnehmende Streustärke, d. h. Streumenge pro Flächeneinheit aufweisenden Randzonen des Streubildes dadurch verändert werden, daß in Streurichtung gesehen vor den Streuorganen ein Abdeckschirm ein- und ausschaltbar vorgesehen ist, der aus einem Mittelteil und beiderseits daran um aufrechte Bolzen schwenkbar und in verschiedenen Winkelstellungen arretierbar angeordneten Seitenteilen besteht.

Hierbei ist es zur Erreichung einer großen Verteilgenauigkeit der Düngemittel auf dem Boden von besonderem Vorteil, wenn u.r. beiderseitigen Randzonen des Streubildes mit abnehmender Streustärke möglichst breit sind. Demgegenüber sollen diese Randzonen möglichst schmal gehalten werden, wenn der Schleuderstreuer auf Beetkulturen eingesetzt wird. Ferner kommt dieser Verringerung der Randzonen mit abfallender Streustärke eine noch größere Bedeutung zu, wenn der Schleuderstreuer zur Verteilung von auftauenden oder abstumpfenden Mitteln auf verschneiten bzw. vereisten Straßen und Wegen herangezogen wird. Ist es doch hierbei im Hinblick auf den Umweltschutz einerseits und zur Vermeidung von Verletzungen anderer Verkehrsteilnehmer bzw. von Beschädigungen von deren Fahrzeugen andererseits unbedingt erforderlich, daß die Streumittel mit gleichmäßiger Streustärke, d. h. Streumenge pro Flächeneinheit innerhalb der vorgesehenen Arbeitsbreite auf dem Boden verteilt, keinesfalls jedoch seitlich über die Arbeitsbreite hinaus von den Streuorganen geschleudert werden.

Eine nur einseitige Verringerung der Randzonen des Streubildes mit abnehmender Streustärke ist dann notwendig, wenn Feldrandstreifen bestreut werden sollen, um ein Bestreuen von angrenzenden anderen Feldern, Gräben oder Wegen zu verhindern.

Die vorgenannten Veränderungen der Randzonen des Streubildes sind prinzipiell möglich. Nachteilig ist jedoch, daß nur bei ausgeschaltetem, d. h. nach oben aus dem Streubereich der Schleuderscheiben herausgeschwenktem Abdeckschirm das für die gleichmäßige Breitverteilung der Düngemittel vorteilhafte Streubild mit beiderseits möglichst breiten Randzonen entsteht. Bereits durch das Einschwenken des Abdeckschirmes ergeben sich selbst bei fluchtend zu dessen Mittelteil verlaufenden Seitenteiion Unregelmäßigkeiten in der Verteilung vor allem von granulierten Düngemitteln auf dem Boden, die auch durch richtiges Anschlußfahren mit Überlappung der Randzonen nicht ausgeglichen werden können. Dieses ist darauf zurückzuführen, daß die Wurfbahnen der gegen den mittleren Bereich des Abdeckschirmes prallenden Düngemittelkörner stark verkürzt werden, so daß im mittleren Bereich des Streubildes bzw. jeder Streubahn Düngemittelanhäufungen nicht zu vermeiden sind.

Ferner ist von erheblichem Nachteil, daß sich die Breite der seitlichen Randzonen durch Einschwenken der Seitenteile des Abdeckschirmes ohne gleichzeitige Verringerung der Arbeitsbreite des Schleuderstreuers nur in verhältnismäßig geringem Umfang verkleinern läßt. Zusätzlich entstehen hierbei innerhalb dieser Randzonen unerwünschte Düngeranhäufungen. Eine weitere und oft erforderliche Verkleinerung der Randzonen läßt sich dann ohne gleichzeitige Verringerung der Arbeitsbreite nicht durchführen. Auf der anderen Seite werden durch das hierfür erforderliche weitere Einschwenken der Seitenteile die Düngeranhäufungen in den Randzonen noch erheblich verstärkt, so daß sich innerhalb dieser Randzonen Auflauf- und Wachstumsschäden der hierin sich entwickelnden Nutzpflanzen nicht vermeiden lassen.

Gegenstand der GB-A-1 022 777 ist ein Schleuderstreuer, bei dem für jedes Streuorgan ein Dosierelement vorgesehen ist, das einstellbar ist. Die Wurfschaufeln sind dabei fest auf der Schleuderscheibe angebracht.

In der NL-C-50 574 sind schließlich mehrere Schleuderstreuer beschrieben und dargestellt, deren Wurfschaufeln einstellbar sind. In einem Fall sind die Wurfschaufeln auf der Schleuderscheibe um ein vertikales Gelenk schwenkbar angeordnet, so daß der horizontale Anstellwinkel verändert werden kann. In einem anderen Fall sind die Wurfscheiben etwa rinnenförmig ausgebildet und an horizontalen Scharnieren befestigt, so daß der Abwurfwinkel eingestellt werden kann.

Der Erfindung liegt die Aufgabe zugrunde, einen Schleuderstreuer der eingangs erläuterten Gattung so auszubilden, daß in jedem Einsatzfall eine gleichmäßige Verteilung der Düngemittel und anderer Streustoffe auf dem Boden und damit ein optimales Streubild garantiert werden.

Diese Aufgabe wird erfindungsgemäß dadurch gelöst, daß auf jeder Schleuderscheibe mindestens eine längere Wurfschaufel und eine kürzere Wurfschaufel vorgesehen sind, wobei der Abstand der Abstandskante der längeren Wurfschaufel von der Rotationsachse der Schleuderscheibe größer als der entsprechende Abstand bei der kürzeren Wurfschaufel unveränderbar ist.

Dies kann dadurch erreicht werden, daß die lotrechten Abwurfwinkel der Wurfschaufeln veränderbar sind, vorzugsweise unabhängig voneinander.

Auf diese Weise wird erreicht, daß in allen Einsatzfällen die Randzonen mit abfallender Streustärke in radialer Richtung einen kontinuierlichen Verlauf haben, weil die kürzeren Wurfschaufeln eine geringere Wurfweite haben als die längeren Wurfschaufeln. Durch die Überlappung der Randzonen beim Anschlußfahren wird die in diesen Zonen zunächst zu geringe Streustärke wieder ausgeglichen.

Mit dem erfindungsgemäß ausgebildeten Schleuderstreuer ist es möglich, auf einer oder auf beiden Seiten des Streubildes dessen Randzone mit abnehmender Streustärke je nach den vorliegenden Einsatzbedingungen ohne Veränderung der Arbeitsbreite des Schleuderstreuers zu vergrößern oder zu verringern, wobei die Streustärke und Streugleichmäßigkeit im übrigen Bereich des Streubildes erhalten bleiben.

Unabhängig hiervon kann auch die Arbeitsbreite der Schleuderstreuer verändert bzw. einer durch eine vorlaufende oder auch eine vorher eingesetzte Drillmaschine vorgegebene Arbeitsbreite genau angepaßt werden. Soll hierbei eine für die maximale Arbeitsbreite vorgesehene Streustärke, d. h. Streumenge pro Flächeneinheit, beibehalten werden, so brauchen die Dosierelemente nur entsprechend dem Arbeitsbreitenverhältnis umgestellt zu werden, so daß auch in diesem Falle eine gleichmäßige Bedüngung der dafür vorgesehenen Feldfläche einschließlich deren Randbereiche der jeweils gewünschten bzw. erforderlichen Streustärke möglich ist. ,

In Weiterbildungen der Erfindung ist vorgesehen, daß der horizontale Anstellwinkel zwischen den Wurfschaufeln und der an der Stelle ihrer Abstreukante an ihrer Umlaufbahn in Drehrichtung angelegten Tangente veränderbar ist.

Dies ist insbesondere vorteilhaft, wenn Randstreifen bestreut werden sollen, so daß der horizontale Anstellwinkel so eingestellt werden kann, daß die Abstreuung im wesentlichen nach hinten erfolgt. Dabei wird dann über die Streubreite eine nahezu konstante Streustärke erreicht, was deshalb besonders wichtig ist, da keine Anschlußfahrt mit Überlappung der Randzone mehr möglich ist, bei der eine zu schwache Randzone ausgeglichen werden könnte.

Die Veränderung der freien seitlichen Wurfweite allein oder zusätzlich durch Änderung des senkrechten Abwurfwinkels der von den Streuorganen abgeworfenen Düngemittel ist deshalb besonders vorteilhaft, weil der Schleuderstreuer ohne weitere Umstellungen oder Verwendung von Vorrichtungen zur Erhöhung des Bodenabstandes seiner Streuorgane auch zur Schosserdüngung eingesetzt werden kann. Ist der Schleuderstreuer als Anbaumaschine für den Kraftheber eines Schleppers ausgebildet, so läßt er sich aufgrund dieser Maßnahmen sogar für die Spätdüngung bereits höher aufgewachsener Pflanzen verwenden, wobei die vorstehend beschriebenen Möglichkeiten der Veränderung der Randzonen des Streubildes und der Arbeitsbreite erhalten bleiben.

Weitere Einzelheiten der Erfindung sind den Patentansprüchen, der nachfolgenden Beispielsbeschreibung und den Zeichnungen zu entnehmen. Von letzteren zeigt

Fig. 1 in Fahrtrichtung gesehen eine Ansicht des Schleuderstreuers von hinten mit Schnitt durch den Vorratsbehälter,

Fig. 2 den Schleuderstreuer im Schnitt II-II und

Fig. 3 den Schleuderstreuer in verkleinertem Maßstab in der Ansicht von hinten mit einem von den Streuorganen erzeugten Streubild.

Der insgesamt mit 1 bezeichnete Schleuderstreuer ist mit einem Rahmen 2 ausgestattet, an dem ein Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich Auslauföffnungen 8 befinden. Diese Auslauföffnungen 8 sind mit Hilfe von schieberförmigen Dosierelementen 9 für sich verschließ- und in unterschiedlichen Öffnungsweiten einstellbar.

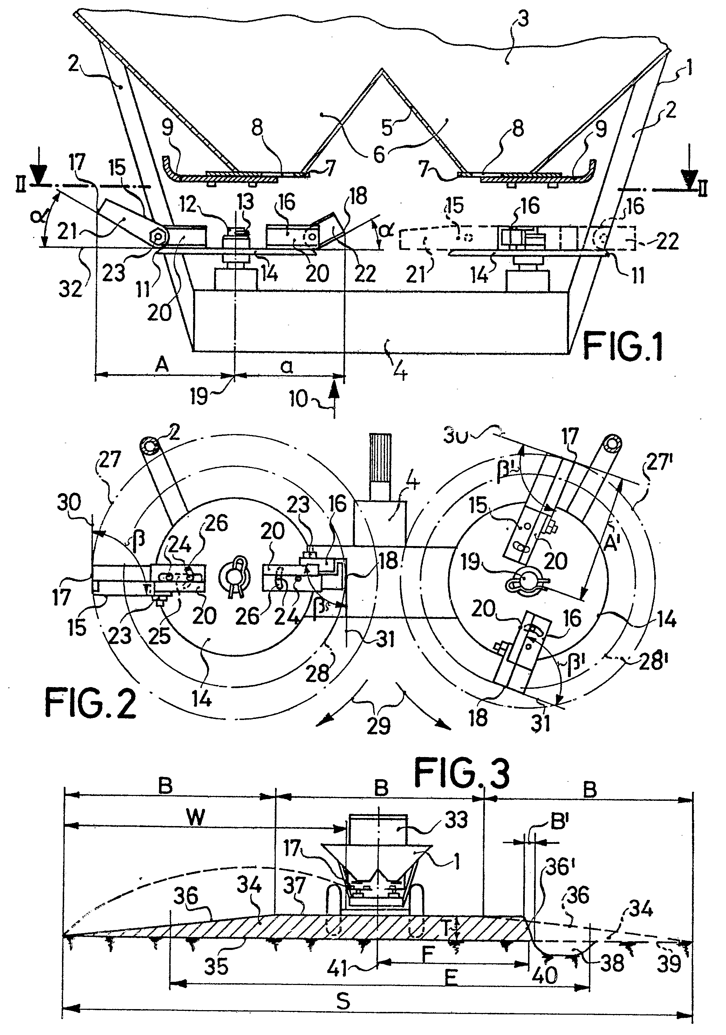

Unterhalb der Auslauföffnungen 8 sind quer zu der in Fig. 2 durch den Pfeil 10 gekennzeichneten Fahrtrichtung Streuorgane 11 an Ausgangswellen 12 des Winkelgetriebes 4 ohne Werkzeug lösbar angeordnet und durch je einen Federsplint 13 gegen axiale Verschiebung auf den Ausgangswellen 12 gesichert. Jedes Streuorgan 11 besteht aus einer Schleuderscheibe 14, ferner einer längeren Wurfschaufel 15 sowie einer kürzeren Wurfschaufel 16. Die längere Wurfschaufel 15 weist eine Abstreukante 17 mit einem größeren Abstand A von der Rotationsachse 19 der Schleuderscheibe 14 auf, als eine an der kürzeren Wurfschaufel 16 angebrachte Abstreukante 18 mit einem geringeren Abstand a (Fig. 1).

Jede Wurfschaufel 15, 16 ist mit einem inneren Teil 20 ausgestattet, an dem bei der längeren Wurfschaufel 15 ein äußerer Teil 21, bei der kürzeren Wurfschaufel 16 ein äußerer Teil 22 in lotrechter Ebene schwenkbar und mit Hilfe je einer Spannmutter 23 arretierbar angeordnet ist. Durch diese Art der Anordnung kann der in lotrechter Ebene gemessene Abwurfwinkel $\alpha$ für die äußeren Teile 21, 22 und damit auch für die von den Steuerorganen 11 abgeschleuderten Streustoffpartikel in unterschiedlichen Größen eingestellt werden (Fig. 1).

Zur Befestigung der inneren Teile 20 der Wurfschaufeln 15, 16 sind je zwei Senkschrauben 24 vorgesehen, welche sowohl die inneren Teile 20 als auch die Schleuderscheiben 14 durchdringen. Ferner weist jede Schleuderscheibe 14 zur Befestigung des inneren Teiles 20 der längeren Wurfschaufel 15 ein radial angeordnetes Langloch 25 auf, so daß auch der Abstand A der längeren Wurfschaufel 15 bzw. der Abstand a der kürzeren Wurfschaufel 16 zur Rotationsachse 19 verändert werden kann. Darüber hinaus befindet sich in jedem inneren Teil 20 ein bogenförmig ausgebildetes Langloch 26. Hierdurch ist es möglich, auch den horizontalen Anstellwinkel $\beta$ zwischen den Wurfschaufeln 15, 16 und den an den Stellen ihrer Abstreukanten 17, 18 an deren Umlaufbahnen 27, 28 in Richtung ihrer durch die Pfeile 29 gekennzeichneten Drehrichtungen angelegten Tangenten 30, 31 zu verändern (Fig. 2).

Bei der in den Fig. 1 und 2 zeichnerisch wiedergegebenen Einstellung beträgt der lotrechte Abwurfwinkel $\alpha$ der äußeren Teile 21, 22 der Wurfschaufeln 15, 16 zu der senkrecht zur Rotationsachse 19 verlaufenden Linie 32 30° bei der in Fahrtrichtung 10 gesehen linken Schleuderscheibe 14, während der horizontale Anstellwinkel $\beta$ dieser Wurfschaufeln eine Größe von 90° aufweist. Wenn nun die Wurfschaufeln 15, 16 bei der rechten Schleuderscheibe 14 in gleicher Weise eingestellt wären, würde bei der Streuarbeit des an einen Schlepper 33 angebauten Schleuderstreuers 1 das in Fig. 3 mit durchgezogenen und durchbrochenen Begrenzungslinien umrahmte symmetrische Streubild 34 auf der Bodenoberfläche 35 entstehen, wobei sich ausgehend von den Abstreukanten 17, 18 eine freie seitliche Wurfweite W für die von den Streuorganen 11 abgeschleuderten Düngemittelpartikel ergibt. Bei diesem Streubild, das sich durch die geringere Wurfweite der kürzeren Wurfschaufeln 16 gegenüber einer größeren Wurfweite der längeren Wurfschaufel 17 ergibt, weisen die Randzonen 36 mit abfallender Streustärke die gleiche Breite B wie dessen mittlerer Bereich 37 auf, so daß die Arbeitsbreite, d. h. die durch Überlappung der Randzonen 36 beim Anschlußfahren sich ergebende effektive Streubreite E geringer als die Streubreite S des Schleuderstreuers 1 ist.

Bei einer derartigen Einstellung der Wurfschaufeln wird das Anschlußfahren wesentlich erleichtert, da auch bei nicht genauer Einhaltung des der effektiven Streubreite E entsprechenden Abstandes zwischen den einzelnen Streubahnmitten keine unzulässigen Streungenauigkeiten entstehen können.

Entsprechend der Darstellung in Fig. 3 soll jedoch der Schleuderstreuer 1 an einem durch einen Graben 38 mit anschließender Straße 39 begrenzten Feldrand 40 entlanggefahren werden, wobei dessen Entfernung F von der durch die Linie 41 gekennzeichneten Mitte des Schleuderstreuers 1 wesentlich geringer als dessen halbe effektive Streubreite E ist und keine Unregelmäßigkeiten in der Düngerverteilung auf der Bodenoberfläche 35 des zu bestreuenden Feldes entstehen dürfen. Ohne Umstellung der Wurfschaufeln 15, 16 der rechten Schleuderscheibe 14 würde nun fast die gesamte Düngemittelmenge der rechten Randzone 36 des Streubildes 34 in den Graben 38 bzw. auf die Straße 39 geschleudert werden und damit für die Feldbedüngung nicht nur verlorengehen, sondern auch die Straße in unzulässigem Maße verunreinigen. Außerdem wäre die Streustärke T im Bereich des Feldrandes 40 geringer als auf dem Feld selbst.

Zur Vermeidung dieser Mängel beim Bestreuen des Feldrandstreifens sind nun die Wurfschaufeln 15, 16 der rechten Schleuderscheibe 14 derart eingestellt, daß sich das in Fig. 3 mit einer Schraffur ausgefüllte Streubild ergibt. Im einzelnen ist hierbei der Abstand A der Abstreukante 17 der längeren Wurfschaufel 15 von der Rotationsachse 19 der Schleuderscheibe 14 entsprechend der Darstellung in Fig. 2 auf das Maß A' verringert. Ferner sind, wie in Fig. 1 mit durchbrochenen Linien wiedergegeben ist, die äußeren Teile 21, 22 der längeren und kürzeren Wurfschaufel 15, 16 in nach unten geschwenkter etwa horizontaler Stellung arretiert, so daß der lotrechte Anstellwinkel $\alpha = 0°$ ist. Außerdem sind die inneren Teile 20 der beiden Wurfschaufeln 15, 16 in entgegen der Drehrichtung 29 zurückgeschwenkter Stellung arretiert, so daß die äußeren Teile 21, 22 mit den an die Umlaufbahnen 27', 28' ihrer Abstreukanten 17, 18 in Drehrichtung 29 angelegten Tangenten 30, 31 einen kleineren Anstellwinkel $\beta'$ einschließen. Zusätzlich ist das rechte schieberförmige Dosierelement 9 so eingestellt, daß die rechte Auslauföffnung 8 eine geringere Öffnungsweite als die linke Auslauföffnung aufweist.

Infolge dieser Maßnahmen ist die Arbeitsbreite des rechten Streuorgans 11 genau der Entfernung F des Feldrandes 40 von der Streuermitte 41 angepaßt. Hierbei ist die Ausbringmenge derart reduziert, daß sich auch auf der rechten Seite des Schleuderstreuers 1 die gleiche Streustärke T wie auf dem gesamten Feld ergibt. Diese Streustärke T bleibt bis zum Feldrand 40 erhalten, wo bei dem Streubild eine sehr schmale Randzone 36' entsteht, deren Breite B' nur einen Bruchteil der Breite B der Randzonen 36 entspricht. Die entsprechenden Einstellungen der Wurfschaufeln können auf einfache Weise nach einer Tabelle vorgenommen werden.

Abschließend ist noch darauf hinzuweisen, daß die Streuarbeit des rechten oder auch des linken Streuorgans 11 durch entsprechende Umstellung der Wurfschaufeln 15, 16 einer größeren oder kleineren Entfernung F des Feldrandstreifens 40 von der Streuermitte 41 angepaßt werden kann. Ist hierbei die Entfernung F des Feldrandes 40 von der Streuermitte 41 gleich der halben effektiven Streubreite E, so braucht durch die Umstellung der Wurfschaufeln lediglich die Randzone 36 ohne Änderung der Arbeitsbreite E entsprechend verkürzt zu werden.

### Patentansprüche

1. Schleuderstreuer zum Verteilen von Düngemitteln u. dgl. mit einem Vorratsbehälter (3), in dessen Boden (7) zwei Dosierelemente (9) für zwei quer zur Fahrtrichtung angeordnete Streuorgane (11) vorgesehen sind, von denen jedes Organ aus einer mit mindestens zwei Wurfschaufeln (15, 16) ausgestatteten, rotierend angetriebenen Schleuderscheibe (14) besteht, dadurch gekennzeichnet, daß auf jeder Schleuderscheibe (14) mindestens eine längere Wurfschaufel (15) und eine kürzere Wurfschaufel (16) vorgesehen sind, wobei der Abstand (A) der Abstreukante (17) der längeren Wurfschaufel (15) von der Rotationsachse (19) der Schleuderscheibe (14) größer als der entsprechende Abstand (a) bei der kürzeren Wurfschaufel (16) und veränderbar ist.

2. Schleuderstreuer nach Anspruch 1, dadurch gekennzeichnet, daß die längere Wurfschaufel (15) in einer lotrechten Ebene mit veränderbarem Abwurfwinkel ($\alpha$) einstellbar ist.

3. Schleuderstreuer nach Anspruch 1 oder 2, dadurch gekennzeichnet, daß die lotrechten Abwurfwinkel ($\alpha$) sowohl der kürzeren Wurfschaufel (16) als auch der längeren Wurfschaufel (15) veränderbar sind.

4. Schleuderstreuer nach mindestens einem der Ansprüche 1 bis 3, dadurch gekennzeichnet, daß der Abwurfwinkel ($\alpha$) bis zu einer Größe von mindestens +20° einstellbar ist.

5. Schleuderstreuer nach mindestens einem der Ansprüche 1 bis 4, dadurch gekennzeichnet, daß der horizontale Anstellwinkel ($\beta$) zwischen der längeren Wurfschaufel (15) und der an der Stelle ihrer Abstreukante (17) an ihre Umlaufbahn (27, 27') in Drehrichtung (29) angelegte Tangente (30) veränderbar ist.

6. Schleuderstreuer nach mindestens einem der Ansprüche 1 bis 5, dadurch gekennzeichnet, daß der horizontale Anstellwinkel ($\beta$) jeder Wurfschaufel (15, 16) veränderbar ist.

7. Schleuderstreuer nach mindestens einem der Ansprüche 1 bis 6, dadurch gekennzeichnet, daß die Wurfschaufeln (15, 16) aus je einem inneren Teil (20) und je einem daran in lotrechter Ebene schwenkbar und in unterschiedlichen Stellungen arretierbar angeordneten äußeren Teil (21, 22) bestehen, daß die inneren Teile (20) in horizontaler Ebene schwenkbar und zusätzlich in radialer Richtung verschiebbar sowie ebenfalls in unterschiedlichen Stellungen arretierbar auf den Schleuderscheiben (14) angeordnet sind.

**Claims**

1. Centrifugal spreader for distributing fertilisers and the like, having a storage container (3), in the bottom (7) of which there are two dispensing elements (9) for, disposed transversely of the direction of travel, two spreading members (11), each of which consists of a rotatingly driven centrifugal disc (14) equipped with at least two thrower blades (15, 16), characterised in that provided on each centrifugal disc (14) there is at least one longer thrower blade (15) and one shorter thrower blade (16), the distance (A) between the spreading edge (17) of the longer thrower blade (15) from the axis of rotation (19) of the centrifugal disc (14) being greater than the corresponding distance (a) in the case of the shorter thrower blade (16) and being variable.

2. Centrifugal spreader according to Claim 1, characterised in that the longer thrower blade (15) is adjustable in a vertical plane with a variable angle ($\alpha$) of throw.

3. Centrifugal spreader according to Claim 1 or 2, characterised in that the vertical angle ($\alpha$) of the throw of both the shorter thrower blade (16) and also of the longer thrower blade (15) are variable.

4. Centrifugal spreader according to at least one of Claims 1 to 3, characterised in that the angle ($\alpha$) of throw is adjustable up to a magnitude of at least +20°.

5. Centrifugal spreader according to at least one of Claims 1 to 4, characterised in that the horizontal angle of attack ($\beta$) between the longer thrower blade (15) and the tangent (30) applied at the location of its spreader edge (17) on its path of rotation (27, 27') in the direction of rotation (29) is variable.

6. Centrifugal spreader according to at least one of Claims 1 to 5, characterised in that the horizontal angle of attack ($\beta$) of each thrower blade (15, 16) is variable.

7. Centrifugal spreader according to at least one of Claims 1 to 6, characterised in that the thrower blades (15, 16) consist of in each case an inner part (20) and an outer part (21, 22) which is pivotable thereon in a vertical plane and which can be locked in different positions, and in that the inner parts (20) are pivotable in a horizontal plane and are in addition displaceable in a radial direction and can also be locked in different positions on the centrifugal discs (14).

**Revendications**

1. Distributeur centrifuge destiné à la répartition d'engrais et autres, comportant une trémie (3) dans le fond (7) de laquelle sont disposés deux éléments doseurs (9) pour deux organes d'épandage (11) disposés perpendiculairement à la direction de la marche, chacun de ces organes étant constitué d'un disque centrifuge (14), entraînés en rotation, pourvus d'au moins deux pelles (15, 16) d'éjection, distributeur caractérisé en ce que l'on prévoit sur chacun des disques centrifuges (14), au moins une pelle d'éjection (15) plus longue, et une pelle d'éjection (16) plus courte, la distance (A) entre l'arête d'éjection (17) de la pelle (15) la plus longue et l'axe de rotation (19) du disque centrifuge (14) étant plus grande que la distance correspondante (a) de la pelle d'éjection (16) la plus courte, et pouvant être modifiée.

2. Distributeur suivant la revendication 1, caractérisé en ce que la pelle d'éjection (15) la plus longue est réglable dans un plan vertical avec un angle d'éjection ($\alpha$) modifiable.

3. Distributeur centrifuge suivant l'une des revendications 1 et 2, caractérisé en ce que les angles verticaux d'éjection ($\alpha$) de la pelle

d'éjection la plus courte (16) aussi bien que de la pelle (15) la plus longue peuvent être modifiés.

4. Distributeur centrifuge suivant l'une quelconque des revendications 1 à 3, caractérisé en ce que l'angle d'éjection ($\alpha$) peut être réglé jusqu'à une grandeur minimum de 20°.

5. Distributeur centrifuge suivant l'une quelconque des revendications 1 à 4, caractérisé en ce que l'on peut modifier l'angle d'incidence ($\beta$) formé entre la pelle d'éjection (15) la plus longue et la tangente (30) tracée à l'endroit de son arête (17) d'éjection, sur la voie de circulation (27, 27'), dans le sens de la rotation (29).

6. Distributeur centrifuge suivant l'une quelconque des revendications 1 à 5, caractérisé en ce que l'on peut modifier l'angle d'incidence horizontal ($\beta$) de chacune des pelles d'éjection (15, 16).

7. Distributeur centrifuge suivant l'une quelconque des revendications 1 à 6, caractérisé en ce que les pelles d'éjection (15, 16) sont constituées chacune d'une partie intérieure (20) et d'une partie extérieure (21, 22) disposée de façon à pouvoir tourner dans un plan vertical et être bloquée dans différentes positions, que la partie intérieure (20) peut tourner dans un plan horizontal et de plus se déplacer dans la direction radiale et être bloquée également dans différentes positions sur le disque (14) centrifuge.

FIG.1

FIG.2

FIG.3